# FASCICULE DE BREVET EUROPEEN

(11) **EP 3 042 424 B1**
(45) Date de publication et mention de la délivrance du brevet: **19.04.2017**
(21) Numéro de dépôt: 14790188.8
(22) Date de dépôt: 06.08.2014
(51) Int. Cl.: H02G 3/12

(54) **BOITIER DE MAÇONNERIE ET PROCEDE D'INSTALLATION D'UN TEL BOITIER**
MAUERWERKGEHÄUSE UND VERFAHREN ZUR INSTALLATION SOLCH EINES GEHÄUSES
MASONRY HOUSING AND METHOD FOR INSTALLING SUCH A HOUSING

(30) Priorité: 02.09.2013 FR 1358383
(43) Date de publication de la demande: 13.07.2016
(73) Titulaire: Legrand France, 87000 Limoges (FR); Legrand SNC, 87000 Limoges (FR)
(72) Inventeur: MAZIERE, Laurent, F-87220 Feytiat (FR); CAILLE, Jean-Loup, F-87510 Peyrilhac (FR); LONGEVILLE, Jérôme, F-87350 Panazol (FR); CHAUMENY, Jean-Luc, F-87590 Saint Just le Martel (FR)
(74) Mandataire: Orsini, Fabienne
(86) Numéro de dépôt international: PCT/FR2014/052056
(87) Numéro de publication internationale: WO 2015/028742

(56) Documents cités:
- EP-A1- 1 046 205
- WO-A1-03/085792
- WO-A1-2005/109587
- FR-A1- 2 176 577
- US-A- 2 506 207
- US-A1- 2001 015 281
- US-A1- 2013 153 256

## Description

### DOMAINE TECHNIQUE AUQUEL SE RAPPORTE L'INVENTION

La présente invention concerne de manière générale l'installation d'appareillages électriques en position encastrée dans des parois maçonnées.

Elle concerne plus particulièrement un boîtier de maçonnerie comportant une paroi latérale qui définit un logement d'accueil.

L'invention s'applique particulièrement avantageusement à l'installation dans une paroi maçonnée d'un appareillage électrique tel qu'un interrupteur, un va-et-vient, un variateur électrique, une prise de courant, une prise réseau (RJ45), une prise de téléphone (RJ11), un voyant, ou encore un détecteur (de fumée, d'inondation, de température, de mouvement ou de lumière).

### ARRIERE-PLAN TECHNOLOGIQUE

On connaît différents types de parois, notamment les cloisons creuses et les parois maçonnées.

Une cloison creuse est généralement composée d'une ossature métallique (formée de montants verticaux et de rails horizontaux) et de panneaux de plâtre rapportés sur l'une au moins des deux faces de l'ossature métallique.

Pour installer un appareillage électrique dans une telle cloison creuse, on utilise actuellement une « boîte pour cloison creuse », comportant une paroi latérale fermée à l'arrière par un fond et bordée à l'avant par un trottoir périphérique adapté à s'appliquer contre la face avant de la cloison creuse. Une telle boîte comprend le plus souvent deux griffes qui interviennent en position diamétralement opposée et qui, sous le contrôle de vis, sont aptes à venir s'accrocher à la cloison creuse. Une telle boîte est décrite dans WO- A- 03085792.

L'installation d'une telle boîte à l'aplomb de la face avant du panneau de plâtre de la cloison creuse se fait sans difficulté, grâce au trottoir périphérique qui vient naturellement s'appliquer contre la face avant de la cloison creuse.

Une paroi maçonnée est quant à elle généralement composée d'une couche structurelle recouverte d'un enduit (par exemple en plâtre).

La couche structurelle peut par exemple être composée d'un empilement de corps creux tels que des briques ou des parpaings.

Pour installer un appareillage électrique dans une telle paroi maçonnée, on utilise actuellement un boîtier de maçonnerie tel que défini en introduction. Un tel boîtier de maçonnerie comporte généralement intérieurement deux puits de vissage permettant d'assujettir le mécanisme d'appareillage ou le support permettant de recevoir le mécanisme d'appareillage.

L'installation de ce boîtier dans la paroi maçonnée (ou dans tout type de support recevant le boîtier) est réalisée de la manière suivante.

Dans un premier temps, l'installateur creuse une cavité dans la couche structurelle de la paroi maçonnée. Il fixe ensuite le boîtier dans la cavité en le tenant d'une main et en le scellant avec son autre main. Enfin, il peut éventuellement fermer le boîtier à l'aide du couvercle de fermeture avant de recouvrir la couche structurelle d'enduit.

Ces opérations d'installation s'avèrent en pratique difficiles à mettre en oeuvre à plusieurs égards.

Il est tout d'abord peu pratique de sceller le boîtier à une seule main.

Il est en outre difficile de maintenir le boîtier « à la verticale » durant son scellement (c'est-à-dire de telle manière que le fond du boîtier soit parallèle à la face avant de la couche structurelle).

Il est par ailleurs difficile de maintenir le boîtier « à l'horizontale » durant son scellement (c'est-à-dire de telle manière que les deux puits de vissage se trouvent situés dans un même plan horizontal, de manière que l'appareillage électrique qui s'y fixe ne se retrouve pas incliné).

Enfin, l'épaisseur d'enduit rapportée sur la couche structurelle n'étant pas encore connue au moment du scellement, il est impossible pour l'installateur de maintenir le boîtier de telle manière que son bord avant s'étende précisément « à l'aplomb » de la face avant de la future couche d'enduit (c'est-à-dire à affleurement de la face avant de la future couche d'enduit).

Par conséquent, le boîtier n'étant en général placé ni à la verticale, ni à l'horizontale, ni à l'aplomb de la face avant de la couche d'enduit, il s'ensuit des difficultés pour mettre en place l'appareillage électrique dans le boîtier de manière esthétique, sauf à retravailler le scellement, ce qui s'avère long et fastidieux.

On connait par ailleurs du document US2001/0015281 un ensemble en trois parties, comportant une embase à fixer en saillie sur une paroi, un cadre d'habillage à fixer autour de l'embase, et une boîte électrique à fixer dans l'embase. Dans ce document, l'embase ne saurait constituer un boîtier de maçonnerie en ce sens qu'elle n'est pas adaptée à être encastrée dans une paroi maçonnée. Elle présente en effet une forme qui permet seulement de la fixer en saillie sur une paroi.

### OBJET DE L'INVENTION

Afin de remédier aux inconvénients précités de l'état de la technique, la présente invention propose un nouveau boîtier de maçonnerie qui permette de simuler une ouverture pratiquée dans une cloison creuse, afin qu'on puisse y rapporter ensuite une boîte pour cloison creuse.

Plus particulièrement, on propose selon l'invention un boîtier de maçonnerie tel que défini dans la revendication 1.

Ainsi, grâce à l'invention, on utilise le boîtier de maçonnerie pour y rapporter une boîte pour cloison creuse dont on sait qu'elle est naturellement conformée pour s'installer verticalement, à l'aplomb de la face avant de la paroi de maçonnerie, quelle que soit la position du boîtier de maçonnerie.

Par conséquent, le soin à apporter au scellement de ce boîtier de maçonnerie est moindre, ce qui facilite son installation et évite plusieurs opérations de reprise de maçonnerie.

L'invention permet par ailleurs de standardiser l'utilisation de boîtes pour cloison creuse, quel que soit le type de paroi (maçonnée ou creuse).

Le boîtier de maçonnerie selon l'invention constitue en outre une réserve dans laquelle il est possible de stocker une grande longueur de fils électriques, ce qui permet de connecter facilement l'appareillage électrique en le tenant à distance de la paroi.

L'utilisation d'une collerette est par ailleurs particulièrement avantageuse, car elle permet d'encastrer en profondeur le boîtier de maçonnerie, puis de rapporter une épaisseur importante d'enduit par-dessus ce dernier (autour de la collerette), ce qui permet à la couche d'enduit de présenter une meilleure résistance.

D'autres caractéristiques avantageuses et non limitatives du boîtier de maçonnerie conforme à l'invention sont définies en revendications 2 à 16.

L'invention propose également un procédé de mise en place d'une boîte pour cloison creuse dans une paroi maçonnée, tel que défini dans les revendications 17 et 18.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un boîtier de maçonnerie selon l'invention ;
- la figure 2 est une vue schématique en perspective assemblée du boîtier de maçonnerie de la figure 1 ;
- la figure 3 est une vue schématique en perspective d'une boîte pour cloison creuse à engager dans le boîtier de maçonnerie de la figure 1 ;
- la figure 4 est une vue en coupe du boîtier de maçonnerie de la figure 1 engagé dans une cavité pratiquée dans la couche structurelle d'une paroi maçonnée ;
- les figures 5 à 8 sont des schémas illustrant les différentes étapes d'installation du boîtier de maçonnerie de la figure 1 dans la paroi maçonnée ;
- les figures 9 et 10 sont des vues en coupe du boîtier de maçonnerie de la figure 1 engagé dans des parois maçonnées dont les enduits présentent des épaisseurs différentes ; et
- la figure 11 est une vue schématique en perspective d'une variante de réalisation du boîtier de maçonnerie de la figure 1.

En préliminaire, on notera que les éléments identiques ou similaires des différentes variantes de réalisation de l'invention représentées sur les différentes figures seront, dans la mesure du possible, référencés par les mêmes signes de référence et ne seront pas décrits à chaque fois.

Dans la suite de la description, on fera référence à deux types de parois, les cloisons creuses et les parois maçonnées.

Une cloison creuse (ou cloison sèche) est définie comme ne nécessitant pas l'emploi de liants hydrauliques et qui peut être posée à sec, à partir d'éléments préfabriqués.

On rappelle qu'une cloison creuse est généralement composée d'une ossature métallique (formée de montants verticaux et de rails horizontaux) et de panneaux de plâtre rapportés sur l'une au moins des deux faces de l'ossature métallique.

Une paroi maçonnée est quant à elle définie comme étant composée de matériaux (pierres de taille, moellons, briques, parpaings, ....) unis entre eux par un liant hydraulique (mortier, plâtre, ciment, colle, ...).

Une telle paroi maçonnée est généralement composée d'une couche structurelle recouverte d'un enduit.

La couche structurelle peut par exemple être composée d'un empilement de corps creux (tels que des briques ou des parpaings), d'un empilement de corps pleins (tels que des pierres) ou d'un corps plein (tel que du béton coulé entre deux panneaux d'une banche).

L'enduit peut être de tout type. Il pourra ainsi par exemple s'agir de plâtre.

Dans la description, les termes « avant » et « arrière » seront utilisés par rapport à la direction du regard de l'installateur de l'installation électrique selon l'invention vers la paroi maçonnée sur laquelle elle est rapportée. Par exemple, lorsque la paroi maçonnée sera une cloison murale d'une pièce, l'avant désignera le côté tourné vers l'intérieur de la pièce et l'arrière désignera le côté tourné vers l'extérieur de la pièce.

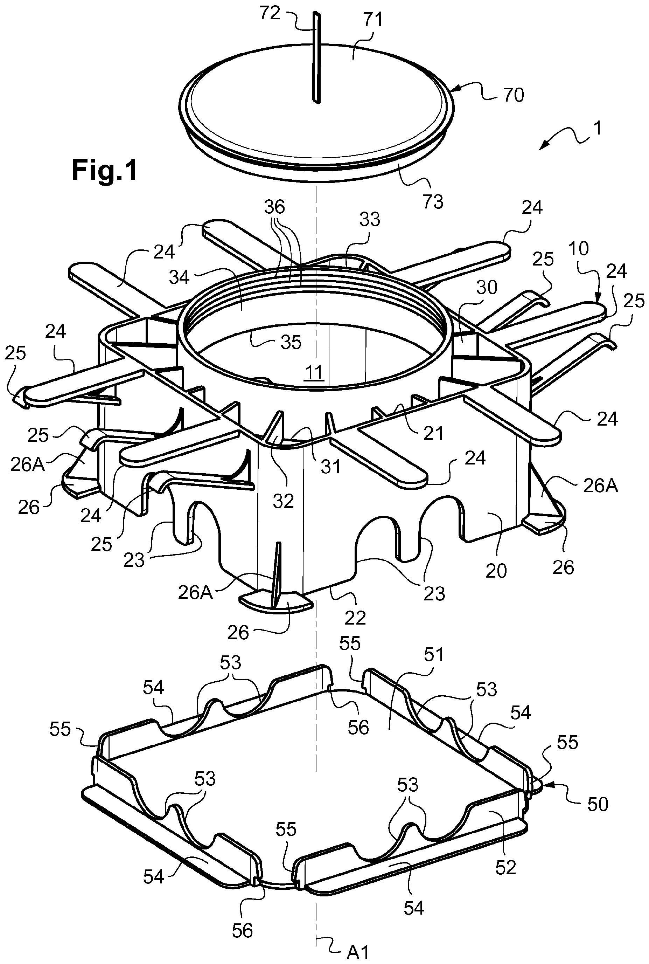

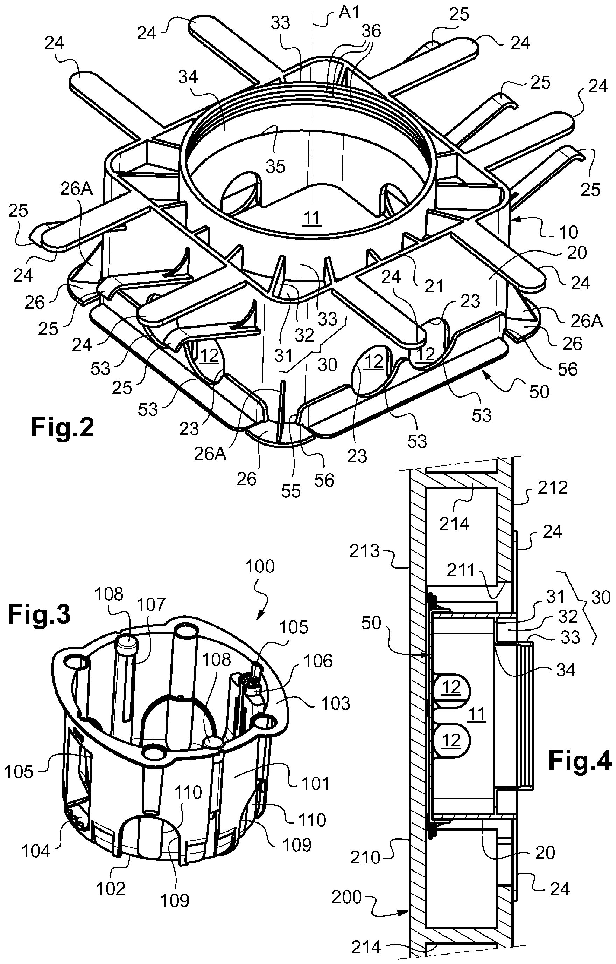

Sur les figures 1 et 2, on a représenté un boîtier de maçonnerie 1 adapté à être fixé dans une cavité d'une paroi maçonnée pour accueillir un appareillage électrique (non représenté).

Ce boîtier de maçonnerie 1 comporte un corps 10 et un couvercle de fermeture 70. Il comporte ici en outre un fond 50 qui ferme à l'arrière le corps 10.

Le corps 10 comprend au moins une paroi latérale 20 qui définit intérieurement un logement d'accueil 11.

Selon l'invention, ce boîtier de maçonnerie 1 n'est pas conçu pour accueillir directement l'appareillage électrique dans son logement d'accueil 11. Le boîtier de maçonnerie 1 est ici conçu pour accueillir une boîte pour cloison creuse dans son logement d'accueil 11, cette boîte étant alors destinée à recevoir intérieurement l'appareillage électrique. Autrement formulé, le boîtier de maçonnerie 1 recrée les conditions qu'un installateur rencontre lors de l'installation d'une boîte dans une cloison creuse.

Le boîtier de maçonnerie 1 comporte à cet effet des moyens de fixation à la paroi maçonnée. En outre, selon une caractéristique particulièrement avantageuse de l'invention, la paroi latérale 20 du corps 10 est partiellement fermée vers l'avant par une paroi frontale 30 qui délimite un conduit d'accueil 34 d'une boîte pour cloison creuse 100.

Le couvercle de fermeture 70 est en outre fixé à ladite paroi frontale 30 pour fermer le conduit d'accueil 34.

Pour bien illustrer le fonctionnement de l'invention, on a représenté sur la figure 3 un exemple d'une boîte pour cloison creuse (désignée dans la suite « boîte 100 ») adaptée à être engagée dans le conduit d'accueil 34 du boîtier de maçonnerie 1.

Dans cet exemple, de manière classique, la boîte 100 présente une forme générale cylindrique. Elle comporte une paroi latérale 101 tubulaire de révolution, qui est fermée à l'arrière par une paroi de fond 102 et qui est ouverte vers l'avant. Elle délimite ainsi un logement intérieur d'accueil du mécanisme de l'appareillage électrique.

Pour sa fixation dans une ouverture circulaire pratiquée dans un panneau de plâtre de cloison creuse, la boîte d'encastrement 100 comporte un trottoir extérieur 103 qui longe extérieurement le bord de l'ouverture avant de la paroi latérale 101 et qui est adapté à prendre appui contre la face avant du panneau de plâtre, tout autour de l'ouverture circulaire. Ainsi, ce trottoir extérieur 103 permet de bloquer la boîte électrique 100 vers l'arrière.

Pour son blocage vers l'avant, la boîte d'encastrement 100 comprend deux griffes 104 qui interviennent en position diamétralement opposée sur la face externe de la paroi latérale 101 et qui, sous le contrôle de vis 105 engagées dans des cheminées 106 prévues dans la paroi latérale 101, pourront venir s'accrocher à la face arrière du panneau de plâtre.

Pour la fixation du mécanisme de l'appareillage électrique, la paroi latérale 101 de la boîte d'encastrement 100 porte intérieurement des puits de vissage 107, dans lesquels se trouvent des vis 108 à engager au travers d'orifices prévus dans un support de l'appareillage électrique (non représenté).

Pour permettre d'engager à l'intérieur de la boîte d'encastrement 100 une gaine de cheminement de câbles 80 (qui loge des fils électriques issus du réseau électrique local), la boîte d'encastrement 100 présente au moins une ouverture de passage 109 (il en est ici prévu quatre).

Ces ouvertures de passage 109 s'étendent chacune à cheval sur la paroi latérale 101 et sur la paroi de fond 102 de la boîte d'encastrement 100 et sont initialement fermées par des opercules défonçables 110.

Dans le mode de réalisation de l'invention représenté sur les figures 1 à 10, le boîtier de maçonnerie 1 est conçu, d'une part, pour s'engager dans une cavité pratiquée dans un empilement de corps creux d'une paroi maçonnée, et, d'autre part, pour accueillir la boîte 100 précitée ou toute autre boîte équivalente.

Comme le montre la figure 1, la paroi latérale 20 du corps 10 du boîtier de maçonnerie 1 comporte quatre pans qui forment ensemble un cadre parallélépipédique. Plus précisément, la paroi latérale 20 est profilée suivant un axe A1, et présente une section transversale à cet axe A1 en forme de carré aux coins arrondis.

Cette paroi latérale 20 présente ainsi un bord avant 21 carré aux coins arrondis, et un bord arrière 22 carré aux coins arrondis, qui s'étendent tous deux dans des plans orthogonaux à l'axe A1.

Cette paroi latérale 20 délimite intérieurement le logement d'accueil 11 du corps 10.

La paroi frontale 30, qui ferme partiellement vers l'avant le logement d'accueil 11, comporte une cloison avant 31 qui délimite une ouverture d'accueil 35, et une collerette 33 qui borde à l'avant ladite ouverture d'accueil 35 pour délimiter le conduit d'accueil 34.

Pour permettre l'introduction de la boîte 100 dans le logement d'accueil 11 via l'ouverture d'accueil 35, cette ouverture d'accueil 35 présente une plus petite largeur dont la dimension est supérieure ou égale à 3 centimètres.

En l'espèce, l'ouverture d'accueil 35 est ici centrée sur l'axe A1 et présente une forme circulaire de diamètre égal, au jeu de montage près, au diamètre extérieur de la paroi latérale 101 de la boîte 100.

La collerette 33 présente alors une forme tubulaire de révolution autour de l'axe A1. Elle délimite un conduit d'accueil 34 dont le diamètre intérieur est égal au diamètre de l'ouverture d'accueil 35.

De cette manière, si l'on engageait la boîte 100 directement au travers du conduit d'accueil 34 du boîtier de maçonnerie 1, son trottoir extérieur 103 viendrait s'appuyer contre le bord avant de la collerette 33.

Pour retenir la boîte 100 dans le boîtier de maçonnerie 1, ce dernier présente une zone d'accroche pour les griffes 104 de la boîte 100 (il est en revanche dépourvu de moyens de réception de vis).

Cette zone d'accroche est ici définie par la face arrière de la cloison avant 31, qui est préférentiellement plane et orthogonale à l'axe A1.

Ici, comme le montre plus particulièrement la figure 2, la cloison avant 31 de la paroi frontale 30 s'étend légèrement en retrait du bord avant 21 de la paroi latérale 20.

La collerette 33 s'élève toutefois au-delà du bord avant 21 de ladite paroi latérale 20.

La collerette 33, la cloison avant 31 et la partie avant de la paroi latérale 20 délimite alors ensemble un volume d'accueil de plâtre.

Pour conférer à la paroi frontale 30 une bonne rigidité, il est ici prévu des nervures de rigidification 32 qui s'étendent radialement (c'est-à-dire dans des plans passant par l'axe A1), entre la face externe de la collerette 33 et la face interne de la paroi latérale 20, dans ledit volume d'accueil de plâtre.

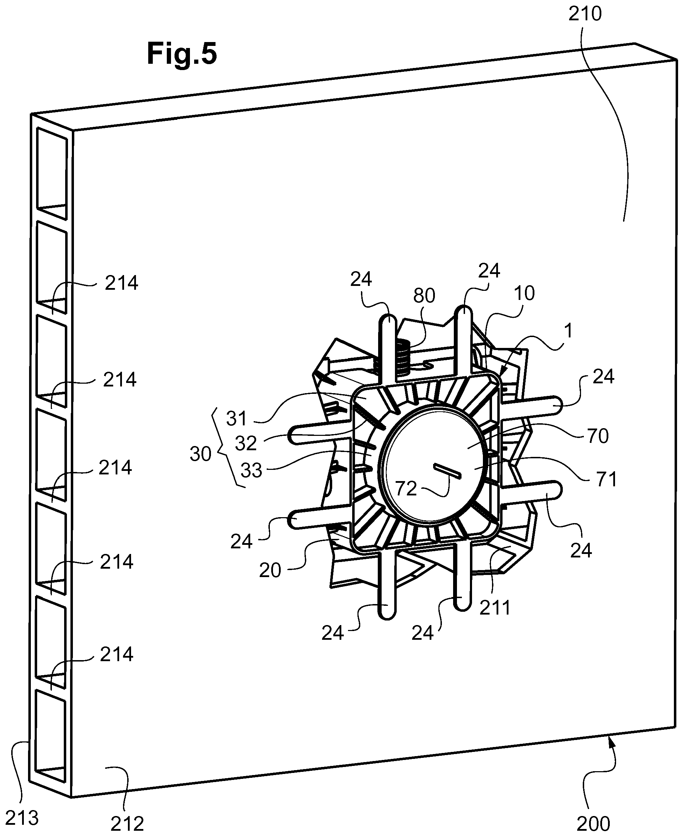

Sur les figures 4 et 5, on a représenté le boîtier de maçonnerie 1 en position encastrée dans une cavité 211 pratiquée dans un empilement 210 de corps creux de la paroi maçonnée 200.

En l'espèce, l'empilement de corps creux représenté est formé d'une brique plâtrière 210.

On observe sur la figure 4 qu'une telle brique plâtrière 210 comporte un panneau avant 212 et un panneau arrière 213 raccordés par des cloisons internes 214.

La paroi latérale 20 du corps 10 du boîtier de maçonnerie 1 comporte avantageusement des moyens de fixation 24, 25 au panneau avant 212 de la brique plâtrière 210.

Ces moyens de fixation comprennent des premières languettes 24 qui s'étendent par paires à partir de chaque côté du bord avant 21 de la paroi latérale 20, vers l'extérieur, orthogonalement à la face extérieure de la paroi latérale 20.

Ces moyens de fixation comprennent également des secondes languettes 25 élastiquement déformables en flexion, qui s'étendent à partir de la face extérieure de la paroi latérale 20, à mi-hauteur de celle-ci, vers l'extérieur, suivant des directions qui sont inclinées vers l'avant par rapport à la face extérieure de la paroi latérale 20.

Tandis que les premières languettes 24 prennent appui contre la face avant du panneau avant 212 de la brique plâtrière 210 pour assurer une pose du boîtier de maçonnerie 1 à l'aplomb de la face avant de ce panneau avant 212, les secondes languettes 25 sont adaptées à s'appuyer contre la face arrière du panneau avant 212 de la brique plâtrière 210 afin de prendre le panneau avant 212 en sandwich avec les premières languettes 24.

Une fois maintenu dans cette position par les languettes, le boîtier de maçonnerie 1 peut donc être scellé dans la cavité 211 par l'installateur, à l'aide de ses deux mains.

Le corps 10 vient ici de formation d'une seule pièce, par moulage d'une matière synthétique telle qu'une matière plastique.

De la même manière, le fond 50 du boîtier de maçonnerie 1 vient de formation d'une seule pièce, par moulage d'une matière isolante. Il est ici distinct du corps 10 mais, comme cela sera exposé plus loin, il pourra être issu de moulage d'une seule pièce avec le corps 10.

En pratique, comme le montre la figure 1, ce fond 50 comporte une paroi arrière 51 carrée et un rebord 52 qui s'élève à partir du bord de la paroi arrière 51, orthogonalement à celle-ci.

Pour assurer un meilleur scellement du boîtier de maçonnerie 1 dans la cavité 211, ce fond 50 comporte en outre quatre languettes 54 qui s'étendent respectivement à partir des quatre côtés de la paroi arrière 51, dans le prolongement de celle-ci, à l'extérieur du rebord 52.

Le corps 10 et le fond 50 comportent des moyens de fixation 26, 56 complémentaires.

Ces moyens de fixation comportent, sur le corps 10, quatre lamelles 26 planes qui s'étendent dans un plan orthogonal à l'axe A1, à partir des quatre coins arrondis du bord arrière 22 de la paroi latérale 20, vers l'extérieur. Chaque lamelle 26 présente un bord intérieur raccordé à la paroi latérale 20, un bord extérieur en quart-de-cercle, et deux bords latéraux rectilignes.

Les moyens de fixation comportent en correspondance, sur le fond 50, quatre échancrures 55 situées en creux dans le bord avant du rebord 52. Ces quatre échancrures 55 sont respectivement situées aux quatre coins du rebord 52 et s'étendent jusqu'à la paroi arrière 51, pour accueillir les quatre lamelles 26.

Les bords de chaque échancrure 55 présentent chacun un décroché 56 qui est prévu de telle manière que les bords latéraux de chaque lamelle 26 puissent s'y encliqueter (voir figure 2).

Ici, il est prévu des nervures de rigidification 26A des lamelles 26, de formes triangulaires, qui s'étendent entre la face externe de la paroi latérale 20 et la face avant de ces lamelles 26.

Comme le montrent les figures 1 et 2, le rebord 52 du fond 50 délimite avec le bord arrière 22 de la paroi latérale 20 au moins une ouverture 12 de passage d'une gaine de cheminement de câbles 80 (figure 5).

En l'espèce, il délimite deux ouvertures 12 dans chacun des quatre côtés du boîtier de maçonnerie 1.

Comme le montre plus particulièrement la figure 1, il est à cet effet prévu huit échancrures 53 en creux dans la tranche avant du rebord 52 du fond 50, qui présentent chacune une forme d'arc-de-cercle. Il est prévu en correspondance huit échancrures 23 en creux dans le bord arrière 22 de la paroi latérale 20, qui présentent chacune une forme en U.

Il est ainsi possible, avant d'assembler le corps 10 avec le fond 50, de placer une gaine de cheminement de câbles 80 au travers de chaque échancrure 23 du corps 10, puis d'assembler le fond 50 avec le corps 10 de manière à bloquer ces gaines dans les ouvertures 12.

Les gaines de cheminement de câbles 80 généralement utilisées sont annelées et présentent ainsi une alternance de nervures et de gorges.

On peut alors prévoir d'ajuster la taille des ouvertures 12 au diamètre des gorges des gaines de cheminement de câbles 80. De cette manière, pour engager une gaine de cheminement de câbles 80 dans l'une des ouvertures 12, il est nécessaire de la rapporter transversalement (par l'arrière) dans l'échancrure 23 prévue en creux dans le bord arrière 22 de la paroi latérale 20, de manière que l'une de gorges de cette gaine de cheminement de câbles 80 coulisse le long des bords de cette échancrure 23. Une fois le fond 50 assemblé au corps 10, la gaine de cheminement de câbles 80 ne peut ainsi plus s'échapper du boîtier de maçonnerie 1.

Ici, avantageusement, les ouvertures 12 ne présentent pas toutes les mêmes dimensions, de manière à pouvoir accueillir des gaines de différents diamètres.

Le couvercle de fermeture 70 apparait en détail sur la figure 1.

Ce couvercle de fermeture 70 est conçu pour fermer uniquement le conduit d'accueil 34, et non pas pour recouvrir toute la paroi frontale 30. Il s'étend donc sur une surface de taille strictement inférieure à celle de la surface délimitée par le bord avant 21 de la paroi latérale 20. Il s'étend plus exactement sur une surface de taille sensiblement égale à celle du conduit d'accueil 34 délimité par la collerette 33 (à 10% près).

Ici, le couvercle de fermeture 70 est distinct de la paroi frontale 30 du corps 10. Avantageusement alors, il est monté de manière amovible sur la paroi frontale 30.

Il comporte une paroi d'obturation 71 qui est bordée à l'arrière par une couronne périphérique 73.

La paroi d'obturation 71 présente un bord périphérique dont la forme est sensiblement identique à celle du bord avant de la collerette 33. Cette paroi d'obturation 71 est ainsi prévue pour reposer contre le bord avant de la collerette 33.

La couronne périphérique 73 s'étend à distance réduite du bord de la paroi d'obturation 71. Elle présente une forme tubulaire et est prévue pour se placer contre la collerette 33, à l'intérieur du conduit d'accueil 34.

Pour le maintien du couvercle de fermeture 70 en position engagée dans le conduit d'accueil 34, la collerette 33 présente intérieurement des crans 36 qui sont adaptés à enserrer fermement la couronne périphérique 73 du couvercle de fermeture 70.

Avantageusement, le couvercle de fermeture 70 comporte en outre une tige 72 cylindrique d'axe A1, qui s'élève orthogonalement à partir du centre de la face avant de la paroi d'obturation 71. La fonction de cette tige 72 sera exposée en détail dans la suite.

Sur les figures 5 à 8, on a représenté les différentes étapes d'installation du boîtier de maçonnerie 1 dans la paroi maçonnée 200.

La première étape, illustrée par la figure 5, consiste à installer le boîtier de maçonnerie 1 dans la couche structurelle (ici la brique plâtrière 210) de la paroi maçonnée 200.

Au cours de cette étape, l'installateur dégage une cavité 211 dans la brique plâtrière 210 en cassant une partie de son panneau avant 212 et de ses cloisons internes 214.

Cette cavité 211 est dégagée de manière à présenter des dimensions supérieures à celles de la paroi latérale 20 du boîtier de maçonnerie 1. Elle est toutefois prévue de telle manière que les premières languettes 24 puissent toutes s'appuyer sur la face avant de la brique plâtrière 210, de part et d'autre de la cavité 211.

Il tire ensuite les gaines de cheminement de câbles 80 à l'intérieur de cette cavité 211 afin de bloquer leurs extrémités entre le fond 50 et le corps 10 du boîtier de maçonnerie 1.

Il engage alors le boîtier de maçonnerie 1 dans la cavité 211 de telle manière que ses premières languettes 24 s'appuient contre la face avant du panneau avant 212 de la brique plâtrière 210 et que ses secondes languettes 25 s'appuient contre la face arrière de ce panneau avant 212.

L'installateur scelle ensuite l'ensemble dans la cavité, par exemple au moyen de plâtre ou de mortier. Grâce aux premières et secondes languettes 24, 25 qui maintiennent le boîtier de maçonnerie 1 en position, l'installateur dispose de ses deux mains pour sceller le boîtier.

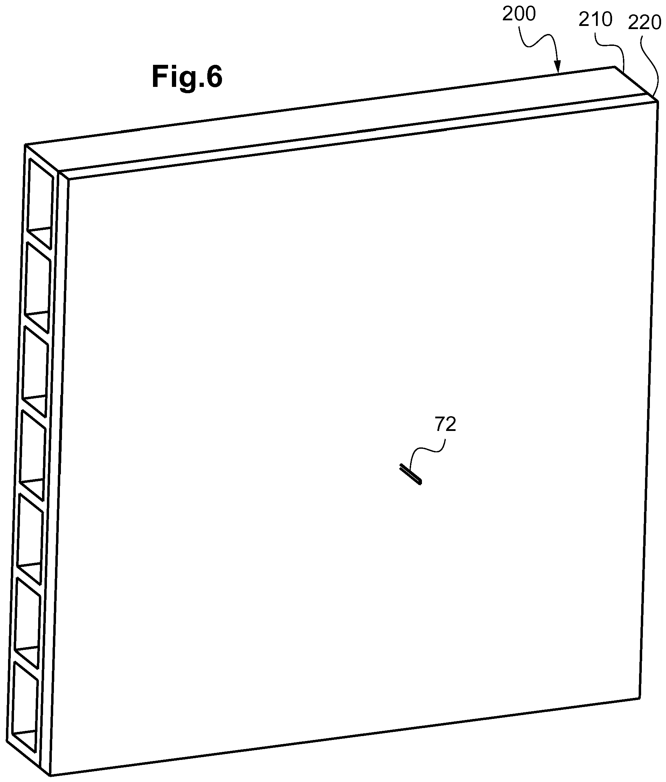

La seconde étape, illustrée par la figure 6, consiste à recouvrir la couche structurelle 210 de la paroi maçonnée 200 par un enduit 220.

Au cours de cette étape, l'installateur (ou un plâtrier) vient recouvrir de plâtre les briques plâtrières 210 de la paroi maçonnée 200.

Il recouvre ainsi de plâtre la cloison avant 31 de la paroi frontale 30 et le couvercle de fermeture 70 du boîtier de maçonnerie 1.

Du plâtre s'engage alors dans le volume d'accueil délimité par la collerette 33, la cloison avant 31 et la partie avant de la paroi latérale 20, ce qui permet d'assurer une épaisseur suffisante d'enduit 220 autour de la collerette 33 du boîtier de maçonnerie 1. Une épaisseur trop réduite d'enduit serait en effet très fragile et pourrait même se fissurer au cours de son séchage.

L'utilisation d'une collerette 33 s'élevant au-delà du bord avant 21 de la paroi latérale 20 du corps 10 permet en outre de faire en sorte que l'épaisseur d'enduit recouvrant le couvercle de fermeture 70 soit plus faible que l'épaisseur d'enduit recouvrant la brique plâtrière 210, ce qui facilitera l'extraction ultérieure du couvercle de fermeture 70.

Comme le montre la figure 6, une fois l'enduit posé, seule la tige 72 du couvercle de fermeture 70 fait encore saillie de la paroi maçonnée 200.

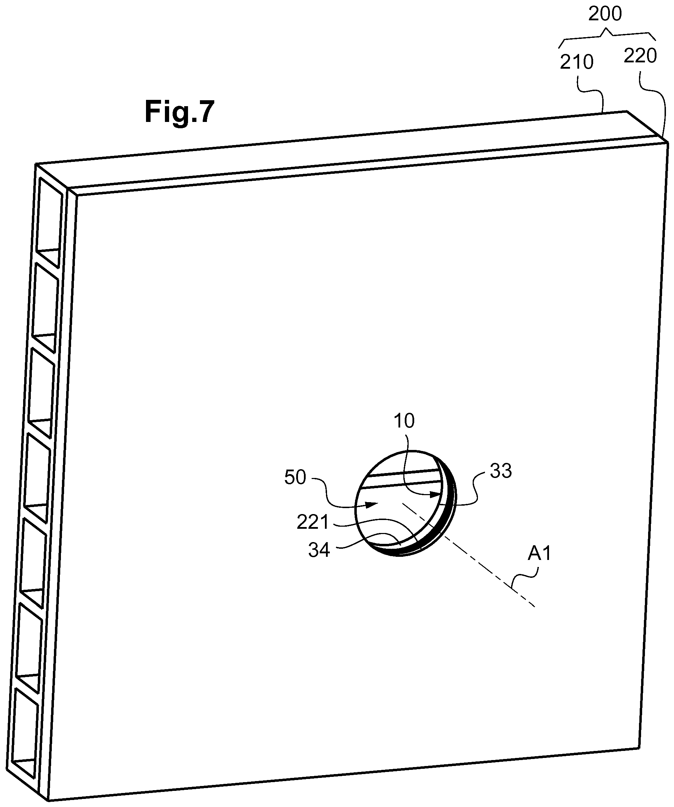

La troisième étape, illustrée par la figure 7, consiste à retirer le couvercle de fermeture 70 hors du conduit d'accueil 34 du corps 10 et hors de la paroi maçonnée 200.

Cette étape est mise en oeuvre manuellement par l'installateur, grâce à la tige 72, alors que l'enduit 220 est encore humide.

Elle permet de découvrir une fenêtre 221 dans l'enduit 220, qui est centrée sur l'axe A1 du conduit d'accueil 34. Cette fenêtre 221 présente alors ici une forme circulaire, de diamètre sensiblement égal à celui du conduit d'accueil 34.

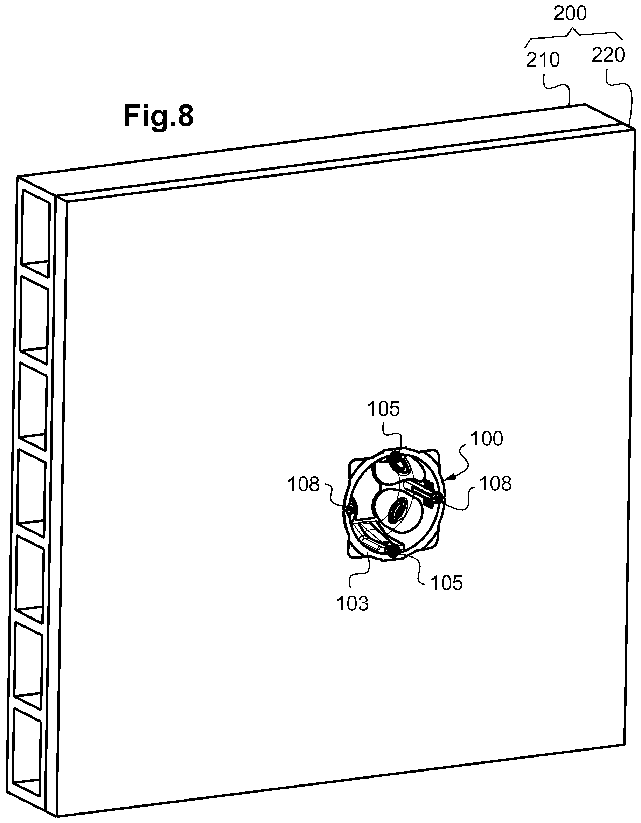

La quatrième étape, illustrée par la figure 8, consiste à fixer la boîte 100 dans le boîtier de maçonnerie 100, en l'engageant au travers de la fenêtre 221 et du conduit d'accueil 34.

Au cours de cette étape, l'installateur enfile les extrémités des fils électriques issus des gaines de cheminement de câbles 80 au travers des ouvertures 109 de la boîte 100, puis il engage la boîte 100 au travers de la fenêtre 221 et du conduit d'accueil 34 de telle manière que son trottoir extérieur 103 s'appuie contre la face avant de l'enduit 220 de la paroi maçonnée 200.

Grâce à ce trottoir extérieur 103, l'installateur s'assure ainsi que la boîte 100 se place exactement à l'aplomb de la face avant de l'enduit 220, en position parfaitement verticale, quelle que soit la position du boîtier de maçonnerie 1 dans la cavité 221. L'installateur peut en outre facilement ajuster la position angulaire de la boîte 100 relativement au boîtier de maçonnerie autour de l'axe A1.

Autrement formulé, une inclinaison du boîtier de maçonnerie autour d'un quelconque axe n'est pas préjudiciable au montage de la boîte 100 « à la verticale », « à l'horizontale », et « à l'aplomb » de la face avant de l'enduit 220.

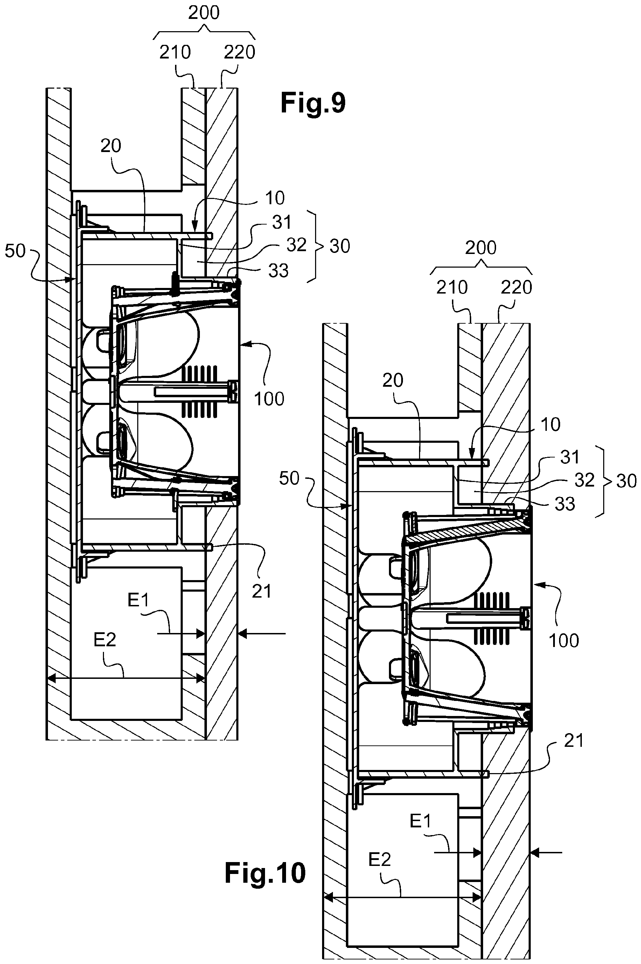

Comme le montrent les figures 9 et 10, la position de la boîte 100 est alors parfaitement à l'aplomb de la face avant de l'enduit 220, quelle que soit l'épaisseur E1 de cet enduit 220.

Comme le montrent également ces deux figures, du fait de l'épaisseur E1 de l'enduit 220 et de l'épaisseur E2 de la brique plâtrière 210, il est possible d'utiliser une boîte 100 de profondeur importante (par exemple 50 mm), ce qui facilitera ensuite l'installation de l'appareillage électrique puisque les fils électriques issus des gaines de cheminement de câbles 80 pourront se loger plus facilement dans cette boîte 100.

Pour fixer la boîte 100 dans cette position, l'installateur manoeuvre ensuite ses vis 105 de manière que ses griffes 104 (voir figure 3) viennent s'accrocher à l'arrière de la cloison avant 31 de la paroi frontale 30 du corps 10 du boîtier de maçonnerie 1.

Dans cette position, la boîte 100 est ainsi apte à recevoir un mécanisme d'appareillage électrique quelconque, grâce à ses vis 108.

La présente invention n'est nullement limitée au mode de réalisation décrit et représenté, mais l'homme du métier saura y apporter toute variante conforme à son esprit.

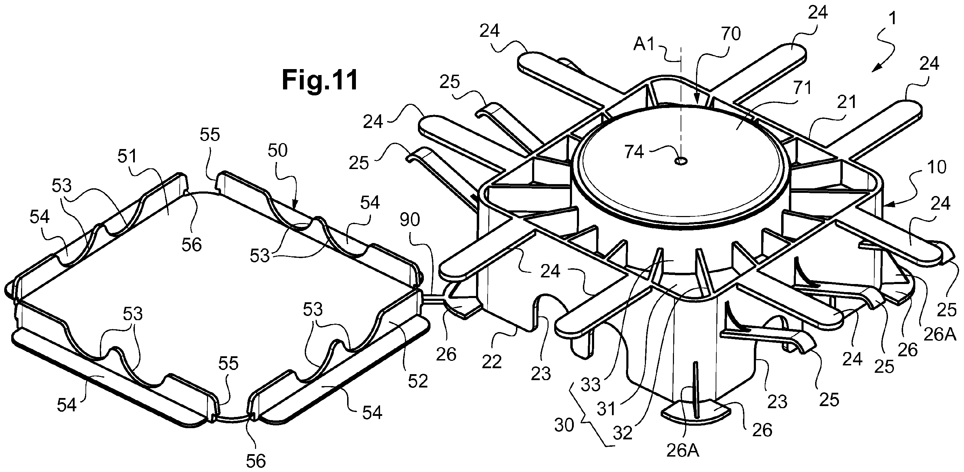

En particulier, comme le montre la figure 11, on pourrait prévoir que le couvercle de fermeture 70 vienne de formation avec la paroi frontale 30.

Dans cette variante, on comprend qu'il ne sera pas possible de retirer le couvercle de fermeture 70 en tirant simplement sur une tige.

Par conséquent, ici, la paroi d'obturation 71 du couvercle de fermeture 70 présente une ouverture centrale 74. Cette ouverture centrale 74 permet de recevoir le foret centreur d'une scie-cloche dans l'axe A1. Elle permet ainsi de guider la scie-cloche dans l'axe du couvercle de fermeture 70, ce qui permet à la scie-cloche de découper proprement le couvercle de fermeture 70, précisément le long de son bord périphérique.

Pour optimiser le guidage du foret centreur, cette ouverture centrale 74 est ici bordée à l'arrière par un tube qui présente une forme de révolution autour de l'axe A1 et un diamètre intérieur de 6,35 mm, égal au diamètre d'un foret centreur d'une scie cloche de 79 mm de diamètre. Un autre avantage de ce tube est qu'il permet de recevoir intérieurement du plâtre. Le plâtre situé au niveau de l'ouverture centrale 74 sèche donc moins vite que le plâtre situé au niveau du couvercle de fermeture 70. Pendant son séchage, il présente donc une couleur plus foncée que le reste du plâtre. Cette tâche foncée indique alors à l'usager la position du boîtier de maçonnerie.

Dans cette variante, le corps 10, le couvercle de fermeture 70 et le fond 50 du boîtier de maçonnerie 1 sont issus d'une seule et même pièce, par moulage d'une matière isolante. Le corps 10 et le fond 50 sont toutefois ici encore considérés comme distincts l'un de l'autre puisqu'ils se raccordent seulement par une partie sécable 90.

Selon une autre variante de l'invention, on pourrait prévoir que le boîtier de maçonnerie soit dépourvu de fond, auquel cas, la paroi latérale du corps sera dimensionnée de telle manière que son bord arrière s'applique contre le panneau arrière de la brique plâtrière, ce qui fermera le logement d'accueil à l'arrière.

Encore en variante, on aurait pu prévoir d'utiliser un boîtier de maçonnerie de forme différente, par exemple de section rectangulaire pour recevoir plusieurs appareillages électriques. Dans cette variante, on pourra prévoir que la paroi frontale du boîtier de maçonnerie délimite plusieurs conduits d'accueil de sections circulaires adaptés à recevoir plusieurs boîtes. On pourrait aussi prévoir que la paroi frontale délimite un unique conduit d'accueil de section oblongue, pour recevoir une unique boîte multiposte de forme allongée.

Selon une autre variante de réalisation de l'invention, on pourrait prévoir que la paroi latérale soit dépourvue de languettes mais comporte au contraire des formes en relief permettant sa fixation à des pierres d'une paroi maçonnée.

Encore en variante, on pourrait prévoir que la paroi latérale soit dépourvue de languettes et que le couvercle de fermeture soit dépourvu de tige ou de guide. Dans cette variante, le couvercle de fermeture sera équipé d'un aimant permettant de fixer le boîtier de maçonnerie sur une banche avant le coulage d'une dalle ou d'un mur en béton.

Selon une autre variante, on pourrait prévoir que le boîtier de maçonnerie soit dépourvu de couvercle de fermeture. Dans cette variante, l'installateur devra enduire la couche structurelle de la paroi maçonnée avec un soin particulier, en prenant grade de ne pas mettre de plâtre à l'intérieur du conduit d'accueil.

## Revendications

1. Boîtier de maçonnerie (1) comportant une paroi latérale (20) qui définit intérieurement un logement d'accueil (11) et qui est partiellement fermée vers l'avant par une paroi frontale (30), ladite paroi frontale (30) comportant, d'une part, une cloison avant (31) qui délimite une ouverture d'accueil (35), et, d'autre part, une collerette (33) qui borde à l'avant ladite ouverture d'accueil (35) pour délimiter un conduit d'accueil (34) d'une boîte pour cloison creuse (100) **caractérisé en ce que** la cloison avant (31) s'étend en retrait du bord avant de la paroi latérale(20).

2. Boîtier de maçonnerie (1) selon la revendication précédente, dans lequel ladite paroi latérale (20) présente une section de forme carrée et ledit conduit d'accueil (34) présente une section de forme ronde ou oblongue.

3. Boîtier de maçonnerie (1) selon l'une des revendications précédentes, dans lequel ladite collerette (33) s'élève au-delà du bord avant (21) de ladite paroi latérale (20).

4. Boîtier de maçonnerie (1) selon l'une des revendications précédentes, dans lequel il est prévu un couvercle de fermeture (70) dudit logement d'accueil (11), et dans lequel ledit couvercle de fermeture (70) est fixé à ladite paroi frontale (30) pour fermer ledit conduit d'accueil (34).

5. Boîtier de maçonnerie (1) selon la revendication précédente, dans lequel ledit couvercle de fermeture (70) présente un bord périphérique dont la forme est sensiblement identique à celle du bord avant du conduit d'accueil (34) et est sensiblement différente de celle du bord avant (21) de la paroi latérale (20).

6. Boîtier de maçonnerie (1) selon l'une des revendications précédentes, dans lequel ledit couvercle de fermeture (70) comporte une paroi d'obturation (71) qui ferme ledit conduit d'accueil (34) et qui présente une ouverture médiane (74).

7. Boîtier de maçonnerie (1) selon la revendication précédente, dans lequel ladite ouverture médiane (74) est bordée à l'arrière par un tube.

8. Boîtier de maçonnerie (1) selon l'une des revendications 4 à 7, dans lequel ledit couvercle de fermeture (70) est distinct de ladite paroi frontale (30) et est monté de manière amovible sur ladite paroi frontale (30).

9. Boîtier de maçonnerie (1) selon la revendication 8, dans lequel ledit couvercle de fermeture (70) comporte une paroi d'obturation (71) adaptée à fermer ledit conduit d'accueil (34) et une tige (72) qui s'élève orthogonalement à partir de la face avant de la paroi d'obturation (71).

10. Boîtier de maçonnerie (1) selon l'une des revendications 4 à 7, dans lequel le couvercle de fermeture (70) vient de formation avec la paroi frontale (30).

11. Boîtier de maçonnerie (1) selon l'une des revendications 8 et 10, dans lequel ledit couvercle de fermeture (70) loge au moins un aimant de blocage sur une banche.

12. Boîtier de maçonnerie (1) selon l'une des revendications 1 à 10, dans lequel ladite paroi latérale (20) comporte des moyens de fixation (24, 25) à des corps creux (210) de paroi maçonnée (200).

13. Boîtier de maçonnerie (1) selon la revendication précédente, dans lequel lesdits moyens de fixation comportent des premières languettes (24) qui s'étendent à partir du bord avant (21) de la paroi latérale (20), orthogonalement à celle-ci, et des secondes languettes (25) élastiquement déformables en flexion qui s'étendent à partir de la face extérieure de la paroi latérale (20), à l'arrière desdites premières languettes (24), et qui sont inclinées vers l'avant.

14. Boîtier de maçonnerie (1) selon l'une des revendications précédentes, dans lequel ladite paroi latérale (20) est fermée à l'arrière par un fond (50).

15. Boîtier de maçonnerie (1) selon la revendication précédente, dans lequel ledit fond (50) comporte des moyens de fixation (56) à ladite paroi latérale (20).

16. Boîtier de maçonnerie (1) selon la revendication précédente, dans lequel ledit fond (50) délimite avec le bord arrière (22) de ladite paroi latérale (20) au moins une ouverture (12) de passage d'une gaine de cheminement de câbles.

17. Procédé de mise en place d'une boîte pour cloison creuse (100) dans une paroi maçonnée (200), comportant des étapes :
i) d'installation d'un boîtier de maçonnerie (1) dans une couche structurelle (210) de la paroi maçonnée (200), ce boîtier de maçonnerie (1) comportant une paroi latérale (20) qui définit intérieurement un logement d'accueil (11) et qui est partiellement fermée vers l'avant par une paroi frontale (30) comportant, d'une part, une cloison avant (31) qui délimite une ouverture d'accueil (35), et, d'autre part, une collerette (33) qui borde à l'avant ladite ouverture d'accueil (35) pour délimiter un conduit d'accueil (34),
ii) de recouvrement de la couche structurelle (210) par un enduit (220),
iii) de fixation de la boîte pour cloison creuse (100) au travers du conduit d'accueil (34) du boîtier de maçonnerie (1).

18. Procédé selon la revendication précédente, dans lequel :
- à l'étape i), le boîtier de maçonnerie (1) installé est conforme à l'une des revendications 4 à 11,
- à l'étape ii), il est prévu de recouvrir le couvercle de fermeture (70) du boîtier de maçonnerie (1) par l'enduit (220), puis de retirer le couvercle de fermeture (70) hors dudit conduit d'accueil (34) et de ladite paroi maçonnée (200) pour découvrir une fenêtre (221) dans l'enduit (220), et
- à l'étape iii), il est prévu d'engager la boîte pour cloison creuse (100) au travers de ladite fenêtre (221) et du conduit d'accueil (34) du boîtier de maçonnerie (1).

## Patentansprüche

1. Unterputzdose (1) mit einer Seitenwand (20), die auf der Innenseite eine Aufnahme (11) definiert und die nach vorne teilweise durch eine Stirnwand (30) geschlossen ist, wobei diese Stirnwand (30) zum einen eine vordere Trennwand (31) umfasst, die eine Aufnahmeöffnung (35) abgrenzt und zum anderen einen Ring (33), der auf der Vorderseite die Aufnahmeöffnung (35) einfasst, um eine Aufnahmeführung (34) für eine Hohlwanddose (100) abzugrenzen, **dadurch gekennzeichnet, dass** sich die vordere Trennwand (31) in Bezug zum vorderen Rand der Seitenwand (20) zurückversetzt erstreckt.

2. Unterputzdose (1) nach vorausgehendem Anspruch, bei der diese Seitenwand (20) eine quadratische Sektion aufweist und die Aufnahmeführung (34) eine runde oder längliche Sektion aufweist.

3. Unterputzdose (1) nach einem der vorausgehenden Ansprüche, bei der sich der Ring (33) über den vorderen Rand (21) der Seitenwand (20) hinaus erstreckt.

4. Unterputzdose (1) nach einem der vorausgehenden Ansprüche, bei der ein Verschlussdeckel (70) für die Aufnahme (11) vorgesehen ist, und bei der dieser Verschlussdeckel (70) an der Stirnwand (30) fixiert ist, um die Aufnahmeführung (34) abzudecken.

5. Unterputzdose (1) nach vorausgehendem Anspruch, bei der der Verschlussdeckel (70) einen peripheren Rand aufweist, dessen Form im Wesentlichen die gleiche Form hat wie der vordere Rand der Aufnahmeführung (34) und im Wesentlichen eine andere Form hat wie der vordere Rand (21) der Seitenwand (20).

6. Unterputzdose (1) nach einem der vorausgehenden Ansprüche, bei der der Verschlussdeckel (70) eine Verschlusswand (71) umfasst, die die Aufnahmeführung (34) abdeckt und eine mittlere Öffnung (74) aufweist.

7. Unterputzdose (1) nach vorausgehendem Anspruch, bei der die mittlere Öffnung (74) auf der hinteren Seite von einer Röhre umrandet wird.

8. Unterputzdose (1) nach einem der Ansprüche 4 bis 7, bei der sich der Verschlussdeckel (70) von der Stirnwand (30) unterscheidet und abnehmbar auf diese Stirnwand (30) montiert ist.

9. Unterputzdose (1) nach Anspruch 8, bei der der Verschlussdeckel (70) eine Verschlusswand (71) umfasst, die die Aufnahmeführung (34) abdecken kann, sowie einen Stift (72), der orthogonal aus der Vorderseite der Verschlusswand (71) heraussteht.

10. Unterputzdose (1) nach einem der Ansprüche 4 bis 7, bei der der Verschlussdeckel (70) zusammen mit der Stirnwand (30) ausgebildet ist.

11. Unterputzdose (1) nach einem der Ansprüche 8 oder 10, bei der der Verschlussdeckel (70) mindestens einen Klemmmagneten auf einer Schalung aufnimmt.

12. Unterputzdose (1) nach einem der Ansprüche 1 bis 10, bei der die Seitenwand (20) Mittel zum Befestigen (24,25) an Hohlkörpern (210) der gemauerten Wand (200) umfasst.

13. Unterputzdose (1) nach vorausgehendem Anspruch, bei der die Befestigungsmittel erste Federn (24) umfassen, die sich ab dem vorderen Rand (21) der Seitenwand (20) orthogonal zu ihr erstrecken, und zweite elastisch biegsame Federn (25), die sich ab der Außenseite der Seitenwand (20) hinter den ersten Federn (24) erstrecken und nach vorne geneigt sind.

14. Unterputzdose (1) nach einem der vorausgehenden Ansprüche, bei der die Seitenwand (20) auf der Rückseite durch einen Boden (50) abgeschlossen wird.

15. Unterputzdose (1) nach vorausgehendem Anspruch, bei der der Boden (50) Mittel zum Befestigen (56) an dieser Seitenwand (20) umfasst.

16. Unterputzdose (1) nach vorausgehendem Anspruch, bei der der Boden (50) mit dem hinteren Rand (22) der Seitenwand (20) mindestens eine Durchführöffnung (12) für eine Kabelführung abgrenzt.

17. Installationsverfahren für eine Hohlwanddose (100) in eine Mauerwand (200) mit folgenden Arbeitsschritten:
i) Installieren einer Unterputzdose (1) in eine Strukturschicht (210) der Mauerwand (200), wobei diese Unterputzdose (1) eine Seitenwand (20) umfasst, die auf der Innenseite eine Aufnahme (11) definiert und die nach vorne teilweise durch eine Stirnwand (30) abgeschlossen ist, wobei diese Stirnwand (30) zum einen eine vordere Trennwand (31) umfasst, die eine Aufnahmeöffnung (35) abgrenzt und zum anderen einen Ring (33), der auf der Vorderseite die Aufnahmeöffnung (35) einfasst, um eine Aufnahmeführung (34) abzugrenzen,
ii) Verputzen der Strukturschicht (210) durch einen Putz (220),
iii) Fixieren der Hohlwanddose (100) durch die Aufnahmeführung (34) der Unterputzdose (1).

18. Verfahren nach vorausgehendem Anspruch, bei dem:
- die im Arbeitsschritt i) installierte Unterputzdose (1) einem der Ansprüche 4 bis 11 entspricht,
- im Arbeitsschritt ii) vorgesehen ist, den Verschlussdeckel (70) der Unterputzdose (1) mit Putz (220) zu verputzen, und dann den Verschlussdeckel (70) aus der Aufnahmeführung (34) und aus der gemauerten Wand (200) herauszuziehen, um ein Fenster (221) im Putz (220) freizulegen, und
- im Arbeitsschritt iii) vorgesehen ist, die Hohlwanddose (100) durch dieses Fenster (221) und durch die Aufnahmeführung (34) der Unterputzdose (1) einzusetzen.

## Claims

1. A masonry box (1) comprising a side wall (20) that internally defines a reception housing (11) and that is closed, in part, towards the front by a front wall (30), said front wall (30) comprising firstly a front partition (31) that defines a reception opening (35), and secondly a collar (33) that, at the front, borders said reception opening (35) so as to define a reception duct (34) for receiving a hollow-partition box (100), the masonry box being **characterized in that** the front partition (31) is set back from the front edge of the side wall (20).

2. A masonry box (1) according to the preceding claim, wherein said side wall (20) presents a section of shape that is square, and said reception duct (34) presents a section of shape that is round or oblong.

3. A masonry box (1) according to any preceding claim, wherein said collar (33) projects beyond the front edge (21) of said side wall (20).

4. A masonry box (1) according to any preceding claim, wherein a closure lid (70) is provided for closing said reception housing (11), and wherein said closure lid (70) is fastened to said front wall (30) so as to close said reception duct (34).

5. A masonry box (1) according to the preceding claim, wherein said closure lid (70) presents a peripheral edge having a shape that is substantially identical to the shape of the front edge of the reception duct (34) and that is substantially different to the shape of the front edge (21) of the side wall (20).

6. A masonry box (1) according to any preceding claim, wherein said closure lid (70) comprises a closure wall (71) that closes said reception duct (34) and that presents a median opening (74).

7. A masonry box (1) according to the preceding claim, wherein said median opening (74) is bordered at the rear by a tube.

8. A masonry box (1) according to any one of claims 4 to 7, wherein said closure lid (70) is distinct from said front wall (30) and is mounted in removable manner on said front wall (30).

9. A masonry box (1) according to claim 8, wherein said closure lid (70) comprises a closure wall (71) that is adapted to close said reception duct (34), and a rod (72) that projects orthogonally from the front face of the closure wall (71).

10. A masonry box (1) according to any one of claims 4 to 7, wherein the closure lid (70) is formed integrally with the front wall (30).

11. A masonry box (1) according to claim 8 or claim 10, wherein said closure lid (70) houses at least one blocker magnet for blocking on a panel.

12. A masonry box (1) according to any one of claims 1 to 10, wherein said side wall (20) includes fastener means (24, 25) for fastening to hollow bodies (210) of a masonry wall (200).

13. A masonry box (1) according to the preceding claim, wherein said fastener means comprise first tabs (24) that extend from the front edge (21) of the side wall (20), orthogonally thereto, and second tabs (25) that are elastically deformable in flexing, that extend from the outside face of the side wall (20), behind said first tabs (24), and that slope forwards.

14. A masonry box (1) according to any preceding claim, wherein said side wall (20) is closed at the rear by a rear wall (50).

15. A masonry box (1) according to the preceding claim, wherein said rear wall (50) includes fastener means (56) for fastening to said side wall (20).

16. A masonry box (1) according to the preceding claim, wherein said rear wall (50) co-operates with the rear edge (22) of said side wall (20) to define at least one opening (12) for passing a cable-routing conduit.

17. A method of putting a hollow-partition box (100) into place in a masonry wall (200), the method comprising the steps of:
i) installing a masonry box (1) in a structural layer (210) of the masonry wall (200), the masonry box (1) comprising a side wall (20) that internally defines a reception housing (11) and that is closed, in part, towards the front by a front wall (30) that comprising firstly a front partition (31) that defines a reception opening (35), and secondly a collar (33) that, at the front, borders said reception opening (35) so as to define a reception duct (34);
ii) covering the structural layer (210) with a covering layer (220); and
iii) fastening the hollow-partition box (100) through the reception duct (34) of the masonry box (1).

18. A method according to the preceding claim, wherein
• in step i), the installed masonry box (1) is in accordance with any one of claims 4 to 11;
• in step ii), provision is made to cover the closure lid (70) of the masonry box (1) with a covering layer (220), then to remove the closure lid (70) from said reception duct (34) and from said masonry wall (200) so as to reveal a hole (221) in the covering layer (220); and
• in step iii), provision is made to engage the hollow-partition box (100) through said hole (221) and through the reception duct (34) of the masonry box (1).
